# EUROPEAN PATENT SPECIFICATION

(11) **EP 2 559 606 B1**
(45) Date of publication and mention of the grant of the patent: **02.10.2013**
(21) Application number: 11177905.4
(22) Date of filing: 18.08.2011
(51) Int. Cl.: B62B 3/02, B62B 3/04, B66C 19/00, B62B 3/10

(54) **System for transporting components in an industrial plant**
System zum Transport von Komponenten in einer Fabrikanlage
Système pour le transport des composants dans une installation industrielle

(43) Date of publication of application: 20.02.2013
(73) Proprietor: Fiat Group Automobiles S.p.A., 10135 Torino (TO) (IT)
(72) Inventor: Rossi, Stefano, 13135 Torino (TO) (IT)
(74) Representative: Gallarotti, Franco

(56) References cited:
- WO-A2-2009/036750
- DE-B3-102004 059 245
- FR-A1- 2 631 948
- US-A1- 2003 099 537

## Description

### Field of the invention

The present invention relates to systems for transporting components in an industrial plant. The invention has been developed with particular reference to systems for handling components that are very cumbersome and/or heavy.

### Prior art

In the industrial-plant sector there is often the need to transport cumbersome and/or heavy components from corresponding stores as far as workstations for assembly of said components, which are generally located along a production line.

Components of the type referred to are, for example, some parts of vehicle body, such as the side panels, which, even though relatively light, have considerable overall dimensions. On the other hand, even components or pieces of relatively small dimensions cannot be fed individually to the assembly stations for obvious reasons of efficiency. A plurality of said components is hence set in one and the same container, and said containers are stored in a corresponding store inside the plant. The containers for the components are then transferred individually from the corresponding store to the workstations where they are used in order to feed the assembly line. Said containers in general have considerable dimensions and weights.

It is widespread practice in industrial production plants to transfer, using fork-lift trucks, the aforesaid containers or the aforesaid cumbersome components supported by corresponding pallets directly from the corresponding stores to the assembly stations along the line. Said system is far from efficient in so far as it presupposes the continuous use of fork-lift trucks also for relatively long stretches within the plant. Moreover, for reasons of safety, the fork-lift trucks must transport only one pallet or one container at a time.

Also known in the industrial context is the use of trolleys or dollies that can be displaced manually by an operator for transporting pieces or containers. Said dollies, on which the components or containers are in any case loaded using fork-lift trucks, are evidently unsuitable for transferring cumbersome and/or heavy loads, except for very short stretches, in so far as they entail a considerable effort on the part of the operators.

Also known are trolleys that can be towed by a motor-driven vehicle, such as an industrial tugger, it also being possible for a number of trolleys to be connected to one another and to the tugger to form a train. In some cases, these trolleys and/or the corresponding tuggers are movable on rails that extend between the stores and the assembly stations. A solution of this sort imposes the need for prior laying of the rails within the plant, with consequent constraints on its layout. Any subsequent modifications to the plant layout impose at least the need to provide new rails. On the other hand, trolleys of a known design that are freely movable on wheels - i.e., without coupling to the aforesaid rails - generally prove far from suitable and far from safe for the purposes of the transport of pallets and/or containers of considerable overall dimensions and/or weight.

WO 2009/036750 A2 discloses all the features of the preamble of claim 1.

### Object of the invention

In broad outline, the object of the present invention is to provide a system for transporting components in an industrial plant based upon the use of freely movable wheeled trolleys, which will enable the problems referred to above to be overcome.

In said context, an object of the invention is to provide a transporting system that is relatively simple and inexpensive to produce, where the operations of loading and unloading of supports or containers for components on and off the aforesaid trolleys can to a major extent be controlled manually by an operator, but without this entailing excessive effort on the part of the operator himself.

Another object of the invention is to provide a transporting system that is very safe, both in regard to the operations of loading and unloading of supports for the components and in regard to transport of the components.

Another object of the invention is to provide a transporting system that is particularly flexible to use.

One or more of the aforesaid objects are achieved, according to the present invention, by a system for transporting components in an industrial plant having the characteristics specified in the annexed claims. The claims constitute an integral part of the technical teaching provided herein in relation to the invention.

### Brief description of the drawings

Further objects, characteristics, and advantages of the invention will emerge clearly from the ensuing detailed description, with reference to the annexed drawings, which are provided purely by way of nonlimiting example and in which:
- Figure 1 is a schematic representation in plan view of a possible layout of an area for storage of supports for components of an industrial plant provided with a transporting system according to the invention;
- Figure 2 is a schematic perspective view of a station for supply of supports for components to an assembly line of an industrial plant provided with a transporting system according to the invention;
- Figure 3 is a schematic perspective view of a charging, respectively, discharging, bay or roller conveyor which is used in the transporting system of Figure 1;
- Figures 4 and 5 are partial and schematic detailed views of the roller conveyor of Figure 3;
- Figure 6 is a schematic perspective view of a trolley of a transporting system, according to one embodiment of the invention;
- Figure 7 is a schematic plan view of the trolley of Figure 6;
- Figure 8 is a schematic perspective view of a portion of the trolley of Figure 6;
- Figure 9 is a partial and schematic perspective view of a constraint arrangement of a guide assembly belonging to a trolley, according to a variant of the invention;
- Figure 10 is a schematic perspective view of a support for components that can be used in one embodiment of the invention;
- Figure 11 is a schematic view in side elevation of a trolley according to one embodiment of the invention, inserted in the receiving space of which is a support for components, according to Figure 10;
- Figure 12 is a partial and schematic cross section, basically according to the line XII-XII of Figure 11, of a guide assembly of the trolley of Figure 11;
- Figure 13 is a partial and schematic plan view of an assembly of the trolley of Figure 11;
- Figure 14 is a partial and schematic representation aimed at illustrating operation of a constraint arrangement of the guide assembly of Figure 13;
- Figure 15 is a partially cross-sectional schematic side view of a guide assembly of the trolley of Figure 11, with a corresponding supporting frame; and
- Figure 16 is similar to Figure 15 and corresponds to a variant of the invention.

### Description of embodiments of the invention

Described in what follows are handling systems for the movement of cumbersome and/or heavy components from corresponding storage areas up to the sides of an assembly line of an industrial plant. By way of example, the plant in question can be a plant for the production of motor vehicles, and the aforesaid components comprise vehicle-body parts, such as side panels and roofs.

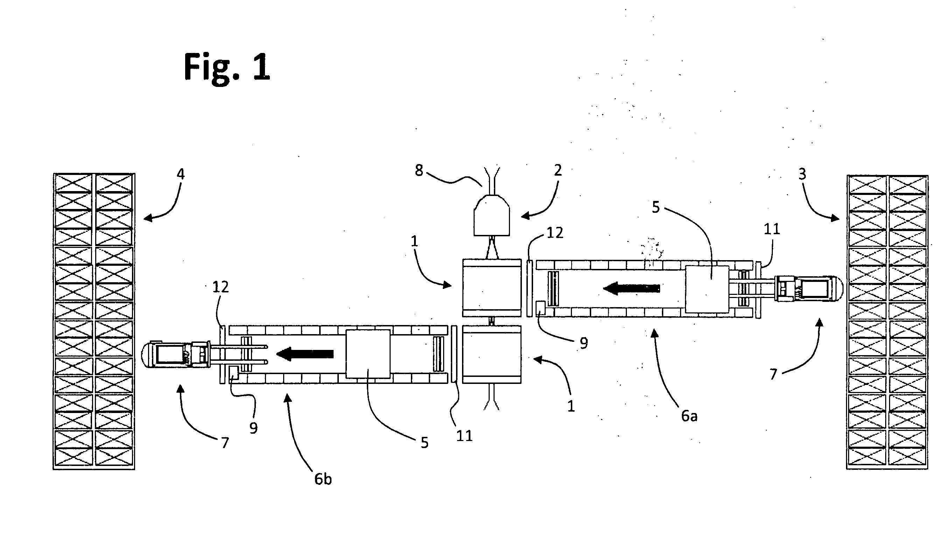

In the embodiment described with reference to Figures 1-9, the handling system comprises:
- transporting trolleys, for handling metal supports for the aforesaid components;
- a system for loading/unloading the supports on/off trolleys in the corresponding stores; and
- an interface alongside the assembly line, for unloading and positioning the supports with respect to the production equipment, in particular robots.

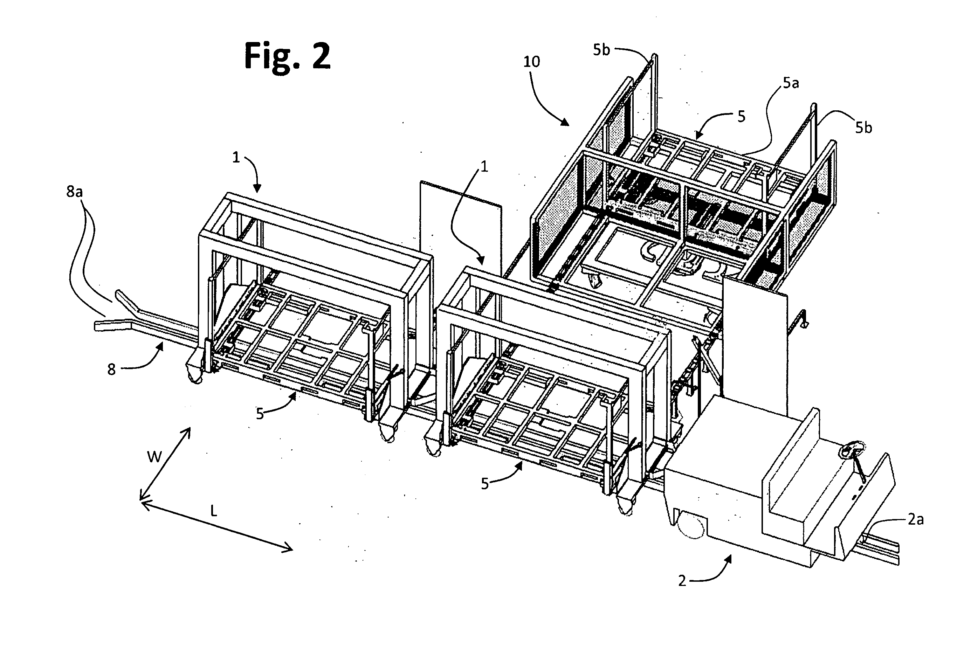

Figure 1 is a schematic representation of the area where the trolleys are loaded/unloaded, according to one embodiment of the invention, two of said trolleys being designated by 1. The trolleys 1 of the system according to the invention are preferably designed for being towed within the plant by industrial tuggers, one of which is designated by 2. A number of trolleys 1 can also be connected up together to form a train pulled by one and the same tugger 2, as exemplified in Figures 1 and 2. As will emerge hereinafter, the trolleys 1 have two steering axles, so that - irrespective of the number of trolleys 1 being towed - they can always be aligned according to the direction of movement of the tugger 2, at the same time rendering manoeuvrability of the system extremely easy.

Designated respectively by 3 and 4 are a loading store and an unloading store for the aforesaid supports, said stores being generally set opposed to one another. Full supports 5, i.e., the supports carrying the components that are to be transported to the assembly line (the side panels, in the example considered) are received in the store 3, whereas the empty supports 5 returning from the aforesaid line are received in the store 4.

In the example shown, the full supports 5 are displaced from the store 3 onto a charging bay or roller conveyor 6a using a fork-lift truck 7; also the empty supports are taken from a discharging bay or roller conveyor 6b using a fork-lift truck 7, to be put back into the store 4.

As has been said, the trolleys 1 of the system according to the invention are provided with steering wheels so as to enable free circulation thereof in the plant without the aid of rails on the ground. However, in a particularly advantageous embodiment of the invention, guides are provided locally on the ground in order to facilitate alignment of the train made up of the trolleys 1 and the tugger 2 in the loading and unloading points. In Figure 1, designated by 8 is one of said guides, which is provided for aligning the aforesaid train with respect to the bays 6a and 6b.

In the example illustrated, the outlet end of the bay 6a and the inlet end of the bay 6b are at a distance such that the train, along with the trolleys 1 facing the bays themselves precisely can penetrate between them. As may be noted, moreover, the bays 6a and 6b are set in positions axially staggered with respect to one another in such a way that, in at least one position of the train, a first trolley 1 is aligned with the bay 6a and the next trolley 1 is aligned with the bay 6b, as exemplified in the figure.

The operating cycle in the store for loading the full supports 5 onto the trolleys 1 basically follows the procedure presented below:
- one support 5 is taken using a fork-lift truck 7 from the store 3 and is deposited on the roller conveyor 6a;
- the support 5 translates autonomously on the roller conveyor 6a, up to a point of end-of-travel determined by a mechanical arrest assembly 9; and
- the operator in charge releases the support 5, actuating the arrest assembly 9 manually, and then pushes the support manually onto the trolley 1.

The operating cycle in the store for unloading the empty supports 5 from the trolleys 1 basically follows the reverse procedure; namely, the operator in charge pushes the empty support 5 manually off the trolley 1 onto the bay 6b, and the support then translates up to the point of end-of-travel determined by the arrest assembly 9; next, the assembly 9 is freed and, using a fork-lift truck 7, the empty support 5 is put back into the store 4 (from which it will subsequently be taken for loading another component).

In possible embodiments (not represented), transfer of the supports 5 from the store 3 to the bay 6a and from the bay 6b to the store 4 could take place in an automated or semi-automated way, for example via suitable manipulation systems.

Preferably, the planes of translation defined by the bays 6a and 6b are inclined - from the inlet end to the outlet end - in order to enable autonomous displacement thereon of the supports 5.

Preferably, axial staggering of the bays 6a and 6b is such that, in at least one position of the train, one trolley 1 can be loaded and another trolley 1 can be unloaded. With reference, for example, to Figure 1, it will be appreciated that, after unloading onto the bay 6b of an empty support 5 coming from the first trolley 1 of the train (here the trolley that immediately follows the tugger 2), the train itself can be made to advance slightly, until said first trolley 1 is brought into alignment with the bay 6a, and in said position the second trolley 1 is in alignment with the bay 6b. In this way, a new full support 5 can be loaded onto the first trolley 1, whilst the corresponding empty support 5 can be unloaded from the second trolley.

In Figure 2, the train made up of the trolleys 1 and the tugger 2 is located at the interface alongside the assembly line (not represented), where the full supports 5 are unloaded and positioned with respect to the production robots. Said interface, which is designated as a whole by 10, can be of any type known in the sector, and its specific construction is irrespective of the purposes of the present invention. It should be noted that in Figure 2 the trolleys 1 are represented merely in respect to their basic structure and that, for greater clarity of representation, also the representation of the components carried by the supports 5 has been omitted. In the example shown, the supports 5 are basically configured as pallets, the framework of which has a base 5a and two end upright structures 5b (see the support 5 at the outlet of the interface 10). Said embodiment is in any case to be understood purely by way of example, in so far as the supports 5 could be configured differently (for example, in the form of containers).

Clearly visible in Figure 2 is a further guide on the ground 8, which presents a design similar to that of Figure 1 and is used for aligning the trolleys 1 precisely at the inlet of the interface 10, said guide being made up of two basically parallel sectional elements, preferably made of metal. As emerges from the figure, the two sectional elements that form the guide 8 are shaped at least at one end so as to provide a lead-in 8a, aimed at facilitating the manoeuvres of insertion by the tugger 2, which is purposely provided with a corresponding coupling element 2a for engagement with the guide 8.

The tuggers 2 can be an AGV (*Automatic Guided Vehicle*), in which case the corresponding guide system is provided for controlling precise positioning of the train for execution of the operations of loading and unloading of the supports or containers 5, in points corresponding to the charge and discharge bays 6a and 6b and interfaces 10 along the line. In the case of tuggers 2 guided by an operator, detection and/or signalling systems are preferably provided, for example using position sensors, aimed at helping the operator to achieve precise positioning of the trolleys 1 at the points where the supports 5 are loaded and unloaded.

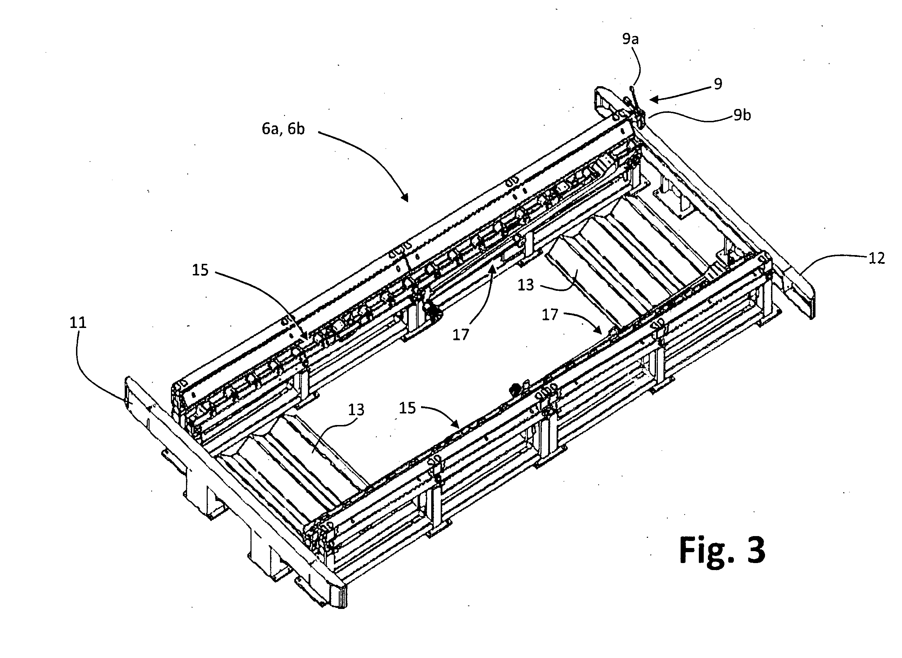

Represented schematically in Figure 3 is the bay 6a, where it is taken for granted that the bay 6b is of similar design. Preferably, the bays 6a and 6b differ only as regards the respective heights for loading and unloading: by way of indication, the heights for loading and unloading can be approximately 540 mm and approximately 450 mm for the bay 6a, and approximately 450 mm and approximately 370 mm for the bay 6b.

Designated by 11 and 12 are two bumper protections, one of which is set at the inlet (charging) end and the other at the outlet (discharging) end of the bay. Said protections have the function of preventing the trolleys 1 and the fork-lift trucks 7 from possibly coming into contact with the load-bearing structure of the bay itself, causing damage thereto. Moreover positioned at the two aforesaid ends are safety shields 13 with inclined planes, aimed at preventing/hindering access to the bay by operators.

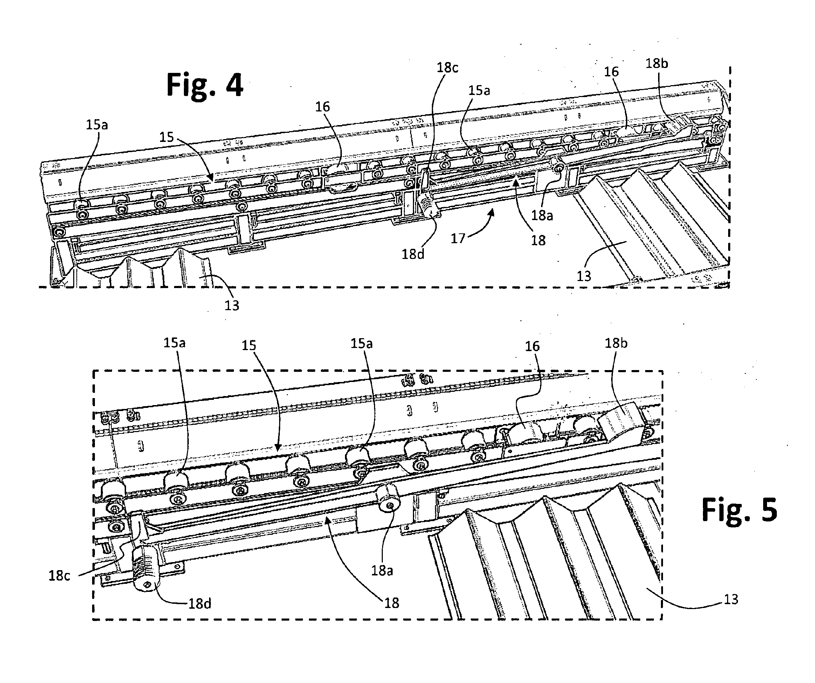

The bay has a metal load-bearing structure, which, as may be seen also in Figure 4, supports two parallel arrays 15 of idler rollers 15a with horizontal axis, defining the plane of translation of the supports 5. As has been said, the rollers 15a are set in such a way that the plane of rolling is at least slightly inclined: indicatively, the slope of the aforesaid plane can be at the most 3% in order to enable translation by gravity of the supports 5 from the inlet end to the outlet end of the bay. The length of the bay, or of the plane of translation defined by the two arrays of rollers, is preferably such as to be able to support two supports 5 at the same time.

Provided on the load-bearing structure of the bay, at its outlet end, is the assembly 9, aimed at stopping movement of the supports 5. The assembly 9 can be of any known design: in the example of Figure 3, the assembly 9 basically envisages a lever 9a, which can be manually operated to bring about displacement of an arrest element 9b between an operative position (represented) and an inoperative position, where, respectively, the arrest element 9b interferes and does not interfere with the passage of a support 5 through the outlet end of the bay. Preferably, the arrest element 9b is forced by an accumulator of mechanical energy (such as a spring) into the respective operative position.

As may be seen in particular in Figures 4 and 5, preferably provided along each array 15 of rollers 15a are at least two braking rollers 16, aimed at reducing the speed of translation of the supports 5. For said purpose, in one embodiment, associated to the shaft of the rollers 16 are clutch means, calibrated in such a way as to cause slowing-down of the supports 5 on the plane of translation, but without stopping them.

Moreover associated to the structure of the bay is a rocker spacing assembly 17, aimed at enabling temporary storage on the bay of two supports 5, at the same time enabling the second support to be kept in position during the step of unloading of the first support from the bay. Preferably two of said assemblies 18 are provided, each at an array 15, as in the example shown.

The assembly 17 basically consists of a rocker lever 18, articulated in an intermediate area thereof to the structure of the bay, via a pin 18a, so as to be able to oscillate between two positions - namely, with reference to the example illustrated - turning about a basically horizontal axis. The rocker lever 18 has, at a first end, an actuation part or projection 18b, which has a preferably curved or inclined top surface, and at the second end an arrest part or projection 18c, which is generally vertical. The projections 18b and 18c face, respectively, the outlet end and the inlet end of the bay. From Figures 4 and 5 it may moreover be noted how, preferably, the two braking rollers 16 are located slightly upstream of the projection 18b and of the projection 18c, respectively, with reference to the direction of translation of the supports 5 on the bay, their purpose being to slow down the supports 5 precisely in the proximity of their positions of interaction with the lever 18.

The lever 18 is normally forced towards an inoperative position, as in the case represented. In said position, in the example shown, the actuation projection 18b is at a greater height than the plane of translation of the supports 5. For said purpose, there may be associated to the lever 18 a spring or other accumulator of mechanical energy, or else, as in the case represented, a mass 18d can be provided in the proximity of the end defining the projection 18c so that the lever 18 tends by gravity to maintain the position of Figure 5.

When a first support 5 is set on the bay, it translates freely on the rollers 15a, towards the outlet end, being slowed down in its movement by the rollers 16. Practically at the end of the useful travel, and after the deceleration brought about by the second roller 16, the structure of the support interferes with each curved or inclined top surface of the actuation projection 18b. The rocker levers 18 then turn about the respective pins 18a - in a clockwise direction as viewed in the figure - so that the arrest projection 18c will come to be located at a height greater than the plane of translation (the end-of-travel for the first support 5 is represented by the assembly 9 described previously). In this way, when a second support 5 is set on the roller conveyor 6a, it can translate on the rollers 15a, 16 up to the position determined by the contact between the structure of the support itself with the arrest projections 18c of the two levers 18. As has been said, not long before reaching the projections 18c, the movement of the support is slowed down by the respective braking rollers 16.

Next, by acting on the arrest assembly 9, the first support 5 can be freed from the bay 6a by pushing it slightly by hand, so that its structure no longer interferes with the actuation projections 18b. The lever 18 can in this way turn towards the initial position, in a direction opposite to the previous one, thanks to the action of the aforesaid spring or of the mass 18d. The consequent lowering of the arrest projections 18c hence frees the second support 5, which can translate towards the outlet end until it encounters the assembly 9, which in the mean time has returned to the operative position; in the mean time, the structure of the second support will come to interfere with the actuation projections 18b, causing a new rotation of the rocker lever 18.

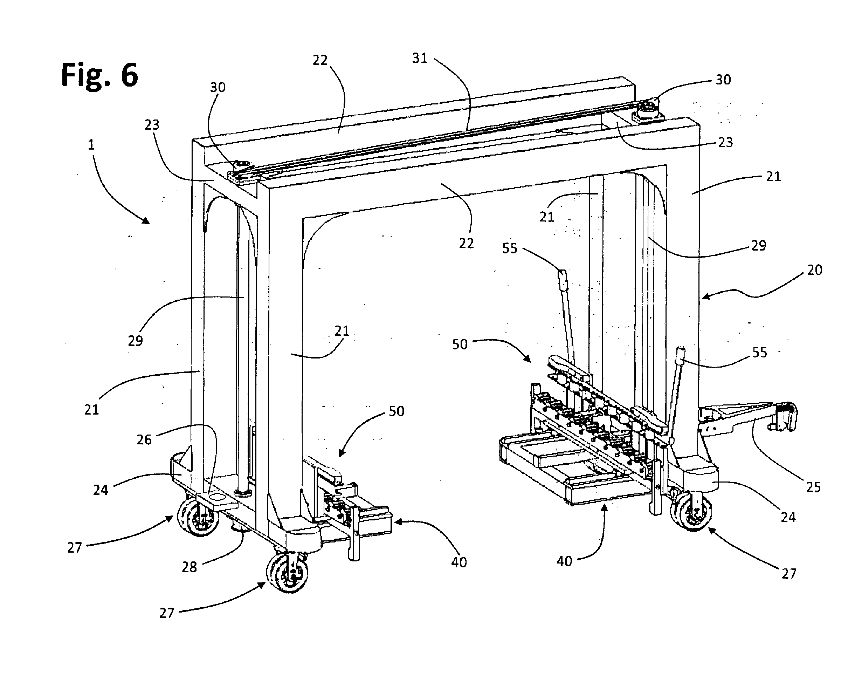

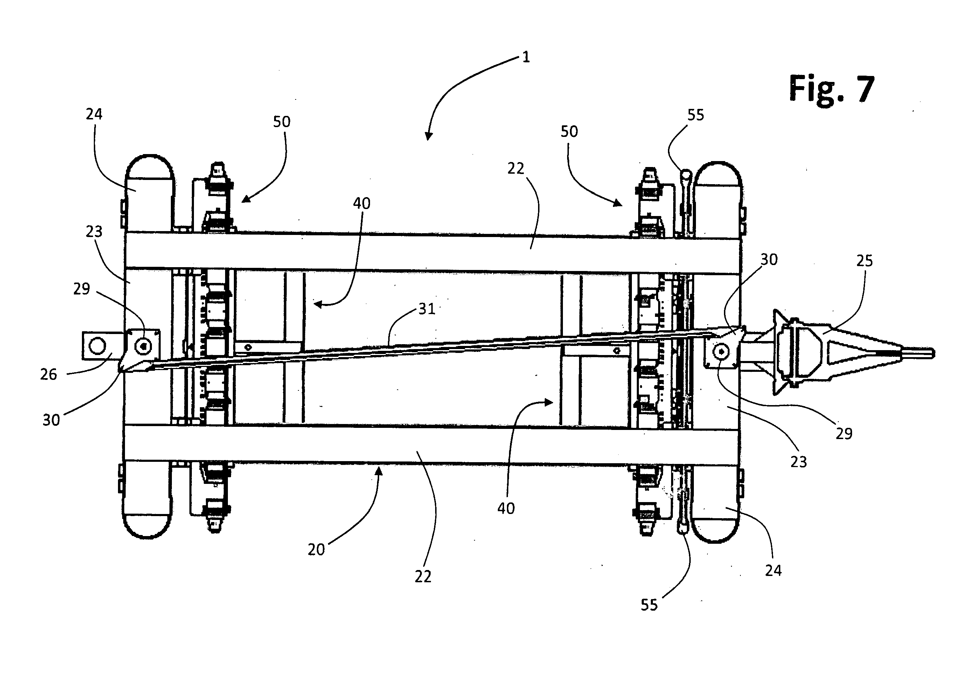

Represented schematically in Figures 6 and 7 is one of the trolleys 1 of the transporting system according to the invention.

The trolley 1 has a metal load-bearing structure 20, made up of electrically welded metal tubular elements. The structure 20 is as a whole a gantry-like structure, defining a receiving space, where the supports 5 can be loaded and unloaded transversely on/off the trolleys 1 on both sides of the structure.

In the example of embodiment illustrated, the structure 20 basically consists of two parallel frames, shaped like a U turned upside down, each comprising two uprights 21, and a longitudinal top member 22, the two frames being connected to one another at the end regions of the uprights 21, via top cross members 23 and bottom cross members 24. A structure of this sort proves particularly sturdy and solid and particularly suitable for the transport of particularly heavy supports and components (for example, up to 750 kg).

Operatively associated to the two bottom cross members 24 are a front towing hook 25 and a rear drawbar 26.

Articulated underneath each cross member 24, in opposite regions, are two sets of wheels 27, each set preferably comprising two twin wheels. The two sets 27 are pivoted so as to turn according to a vertical axis and are articulated to one another by means of a transmission system - comprising, for example, connection rods and tierods - so as to steer in a synchronized way. A system of this sort, which is of a design in itself known, can be connected to a respective rotary thrust bearing 28. Also at least the front towing hook 25 is connected to a respective thrust bearing (not visible in the figures).

The aforesaid transmission systems are in turn connected to one another by means of a further transmission system in order to synchronize steering of the front and rear sets of wheels 27. In the case exemplified, connected to the two thrust bearings 28 are the bottom ends of two vertical shafts 29, passing in the cross members 24 and 23, transmissions 30 being instead associated to the top ends. As may be noted in particular in Figure 7, connected, in eccentric positions, to the transmissions 30 are the two ends of a top tierod 31.

The arrangement is such that the angular movement of the towing hook 25 is transferred to the corresponding thrust bearing, thus bringing about steering of the front sets of wheels 27 (which, as has been said, are connected to the front thrust bearing by means of a corresponding transmission system). The movement thus imparted on the front thrust bearing is transferred, via the shafts 29, the transmissions 30, and the tierod 31, to the rear thrust bearing 28, thereby obtaining also steering of the rear sets of wheels 27.

In one embodiment of the invention, associated to facing surfaces of the structure 20 inside the aforesaid receiving space are guide assemblies aimed at facilitating loading and unloading of the supports 5. According to a characteristic of the invention, the aforesaid guide assemblies are mounted in an adjustable way with respect to the gantry structure 5.

In the example illustrated, rigidly connected to the bottom cross members 24 are two supporting frames 40, set opposed to one another, which basically project in cantilever fashion towards the inside of the receiving space defined in the gantry structure 20. Fixed in a stationary position on each supporting frame 40 is a corresponding guide assembly.

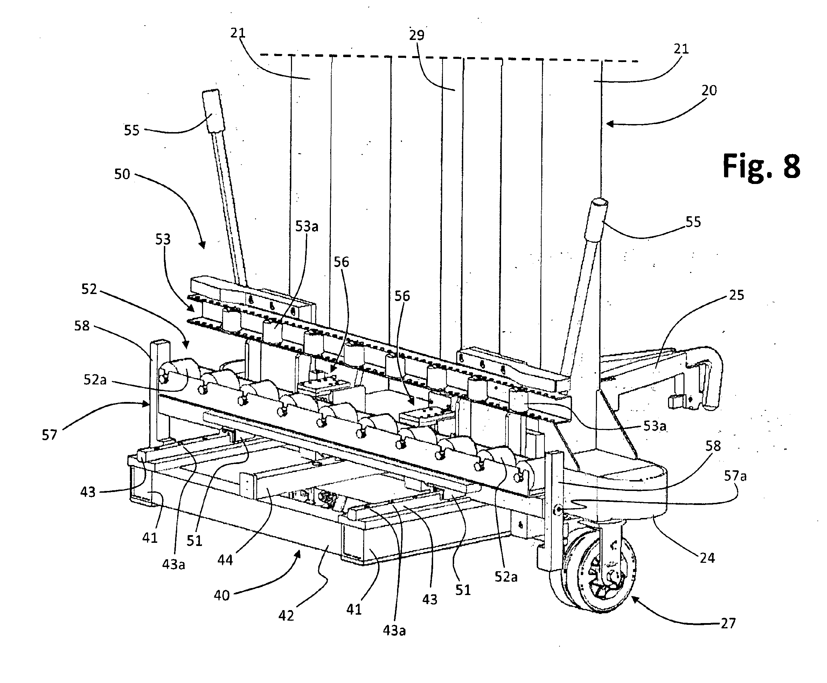

As may be seen in particular in Figure 8, in the embodiment exemplified each frame 40 comprises at least two sectional elements 41, preferably tubular, which are fixed (for example welded, bolted, or screwed) to the cross members 24 and/or to the uprights 21 so as to project towards the space defined by the structure 20. The sectional elements 41, which are parallel to one another and with respect to the longitudinal members 22 of the structure 20, can be connected to one another at the respective front ends by means of a respective end sectional element 42.

In the example, the guide assemblies 50 are mounted in an adjustable way with respect to the corresponding supporting frames 40, which are fixed with respect to the structure 20.

For the above purpose, in the example illustrated, provided at the top face of each sectional element 41 are longitudinal positioning guides 43, each of which defines a plurality of predetermined positioning points, some of which are designated by 43a. In addition to the guides 43 provided at the sectional elements 41, there may also be provided an intermediate longitudinal guide 44 parallel to the guides 43.

Fixed to the metal structure of the assemblies 50 are bottom members 51 for coupling with the guides 43, 44, said members preferably defining a cavity having a shape that is basically complementary to that of the sectional element of the guides 43, 44. In the example, said members 51 include bridge members or similar elements basically shaped like a U turned upside down, which can be fitted on the guides 43, 44 and be able to slide thereon.

The predetermined positioning points 43a can be formed, for example, by holes present in the top parts of the guides 43, 44, in which there can be received respective elements for blocking the coupling members 51. The aforesaid holes may also be threaded, in which case the blocking elements may consist of screws. The members 51 can also be shaped in the form of a vice, with jaws that can be tightened on the guides at the points 43, appropriately defined (for example, by purposely provided lead-ins or reference notches).

Irrespective of the practical embodiment, the arrangement is such that the assemblies 50 can be positioned on the respective frames 40 in a plurality of alternative positions, i.e., in an adjustable way, in particular in order to vary the distance between the assemblies 50, towards the inside of the receiving space defined by the gantry structure 20.

The possibility of adjusting the position of the assemblies 50 on the longitudinal guides 43, 44 of the frames 40 enables use of one and the same trolley structure 1 with a plurality of versions of supports 5, basically normalized in terms of dimensions, and in particular having basically similar widths W (for example, widths W roughly comprised between 1200 mm and 1400 mm), but distinguished by different dimensions of length L (for example, lengths L of 2000 mm, 2400 mm, 2700 mm). Consequently, in the case of use of longer supports 5 (for example, with sides having a length of 2700 mm), used for displacements of particularly cumbersome components, each assembly 50 may be fixed on the corresponding frame 40 in a position closer to the respective cross member 24 of the structure 20. In the case of movement of components of smaller dimensions, and hence of supports 5 shorter than the ones referred to previously (for example, roofs having a length of 2000 mm), the assemblies 50 may be fixed on the corresponding frames 40 in a position closer to the end sectional elements 42 (i.e., in a position more advanced towards the inside of the space defined by the structure 20).

It will be appreciated that it is not strictly indispensable for both of the assemblies 50 of a trolley 1 to be mounted in an adjustable way with respect to the structure 20, given that to enable loading of supports having different lengths it may prove sufficient to adjust the position of just one assembly 50.

The adjustment of position of an assembly 50 can be obtained in a simple way by releasing the members 51 from the corresponding guides 43, 44 (for example, by removing the aforesaid blocking elements or by loosening the aforesaid vices). At this point the structure of the assembly 50 can be translated forwards or backwards along the guides 43, 44, to which the members 51 remain in any case coupled in a slack way, as far as the new adjustment position. At this point it is sufficient to block the members 51 again with respect to the guides 43, 44.

The guide assemblies 50 comprise at least one array of rollers, designed to facilitate manual displacement of the supports 5 on the trolleys 1.

In the example of embodiment shown, each assembly 50 includes a bottom array of rollers 52 and a lateral array of rollers 53, which are basically orthogonal to one another. The rollers 52a of the array 52 are able to turn, preferably in an idle way, about respective horizontal axes and are designed to sustain from beneath the structure of the support 5, as well as facilitate translation thereof during loading or unloading onto/off the trolley 1. The rollers 53a of the array 53 are, instead, able to turn about respective vertical axes, preferably in an idle way, and are designed to guide and contain the structure of the support 5 laterally, both during loading and unloading and during transport.

The assemblies 50 are moreover provided with means for constraining the support 5 with respect to the structure 20 during transport. In a preferred embodiment of the invention, at least one of the two assemblies 50 includes two different systems for constraining the support 5 in a basically predefined transporting position. Said measure is particularly advantageous for safety purposes.

In the case shown in Figure 8, the assembly 50 includes a first locking system, which can be manually operated by the operator in charge via any one of two levers 55. Displacement of said lever 55 determines actuation of a mechanism, which can be obtained with a technique in itself known, designed to cause displacement of a pair of locking plates 56, aimed at constraining the structure of the support 5 on the rollers 52. In one embodiment the aforesaid mechanism, which is preferably of a bistable type, is configured in such a way that the plates 56 will shift from a raised position, in which they are not in contact with the structure of the support 5 when this translates on the rollers 52a, to a stable lowered position, in which the plates 56 are set up against the structure of the support 5, with possible pressure of the latter towards the rollers 52a, so as to constrain the structure itself in position. Alternatively, it is also possible to configure the aforesaid mechanism in such a way that the plates 56 displace from a retracted position, in which they do not interfere with the structure of the support 5 when this translates on the rollers 52a, to an advanced position, in which the plates 56 are inserted stably in purposely provided lateral passages of the structure of the support 5, constraining it in position with respect to the rollers 52a and to the rollers 53a.

The guide assembly 50 of Figure 8 further comprises a second constraint arrangement, which is instead with basically automatic actuation. Said arrangement comprises an arrest member 57, pivoted to the structure of the assembly 50 so as to turn according to a horizontal axis 57a, parallel to the bases 24 of the structure 20 (i.e., to the direction of insertion/extraction of the supports 5 on/off the trolleys 1). In the embodiment shown, the member 57 has two end arrests 58 extending axially, which are preferably but not necessarily mutually fixed in rotation about the axis 57a. The arrests 58 are normally set vertical, as represented in Figure 8: for said purpose, elastic means can be provided that force the member 57 into said normal operative position; another possibility. (as in the case represented) is that of rendering the arrests 58 heavier in their bottom part so that the position of Figure 8 is obtained by gravity.

In their normal operative position, the top ends of the arrests 58 are in a position such as to hinder movement of a container 5 on the rollers 52a. More in particular, in the.case of Figure 8 the top ends of the arrests 58 extend above the plane of translation defined by the rollers 52a. The distance between the arrests is a little greater than the width of the supports 5 to be transported.

When the trolley 1 is brought at a point of loading/unloading of a support (such as those represented in Figures 1 and 2), the body of the arrest elements 58 interferes with a fixed contrast, which determines rotation thereof about the axis 57a (in a clockwise direction, as viewed Figure 8). In this way, the top ends of the arrests 58 drop below the plane of translation defined by the rollers 52a, preventing any interference with the support 5 that is being loaded or unloaded.

For example, during positioning of a trolley 1 at the loading bay 6a (see Figure 1) the arrest 58 to the right (with reference to Figure 1) comes into contact with the contrast element referred to previously, which can for example be associated to the bumper protection 12, or be constituted by said protection 12. As the trolley 1 advances as far as the loading position, also the second right-hand arrest 58, of the rear assembly 50, will then interfere with the aforesaid contrast element.

In this way, as has been said, the arrests 58 turn in the direction where they do not constitute an obstacle along the plane of translation formed by the rollers 52a. The operator can then push the support 5 manually onto the trolley 1, with a modest effort, in the ways described previously, as far as an intermediate position with respect to the arrests 58, and then block the support 5 in position, acting on the lever 55, which causes passage of the plates 56 from the inoperative position to the operative position. Next, when the trolley 1 is made to advance, the elements 58 will free from interference with the aforesaid contrast element (in the example represented from the protection 12), returning to the operative position of Figure 8. In said position, the structure of the support 5, which is already blocked by means of the plates 56, will come to occupy an intermediate position with respect to the arrests 58 of the member 57, and will hence be constrained thereby without any possibility of exiting from the overall dimensions imposed during transport.

Of course, a similar automatic actuation of the arrest members 57 can occur at the bay 6b of Figure 1 and at the interface 10 of Figure 2. Consequently, also in the position of unloading of the support 5 from the trolley 1, the arrests 58 will be brought into a position such as not to interfere with the translation of the support 5 on the rollers 52a, and the support 5, after release of the plates 56 carried out by the operator by acting on a lever 55, may be pushed manually onto the bay 6b or within the interface 10.

In a possible variant, even though the two arrests 58 are both mounted so that they can turn about the axis 57a, they are not fixed with respect to one another; i.e., they can turn independently of one another. In such an embodiment, positioning of the trolley 1 in the point of loading of the support 5 determines, in a way similar to what has been described above, rotation of just one of the two arrests 58, for example the arrest to the right in Figure 8. In this way, the support 5 can translate on the rollers 52a as far as an end-of-travel position determined by the other arrest 58 (i.e., the one to the left, with reference to the example). During unloading of the support 5, there will be obtained, instead, just rotation of the left-hand arrest 58. In this way, the support 5 may translate on the rollers 52a leaving the trolley 1.

In the case exemplified in Figures 6-8, just the assembly 50 close to the front of the trolley 1 is provided with the two systems of constraint described above, whereas the assembly 50 close to the back of the trolley 1 has only the second system of constraint. Obviously, not ruled out is the possibility of envisaging two similar assemblies 50, and hence provided with both the constraint systems, even though this is not strictly indispensable in order to guarantee maintenance of the correct position of the support 5 during transport.

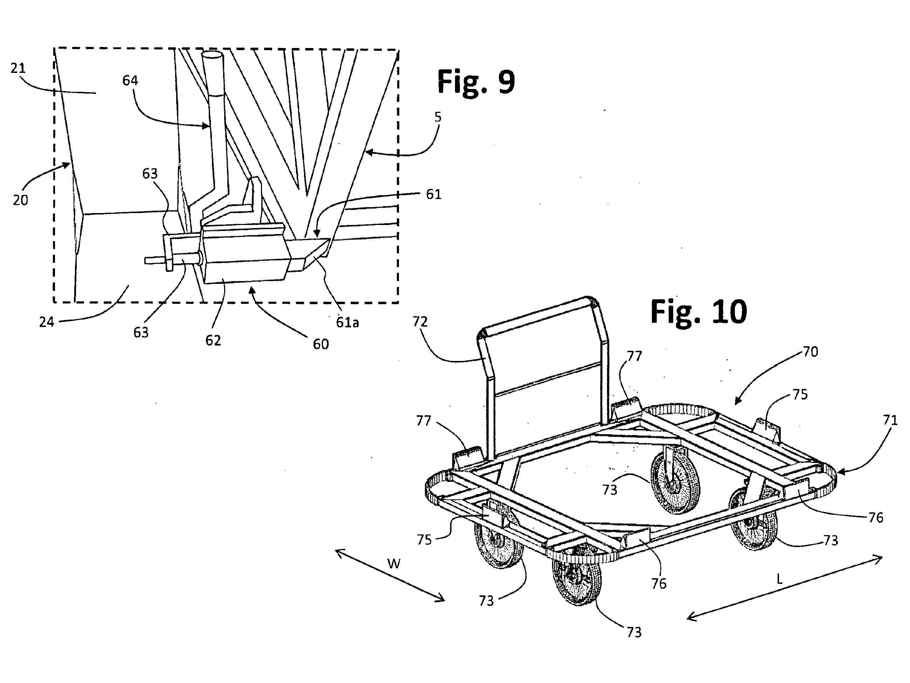

Figure 9 is a schematic illustration of a possible variant embodiment of the second system of constraint. Visible in said figure are just the elements useful for an understanding of the variant in question, the assembly 50 as a whole 50 not being represented. The device 60 is conceived in such a way that locking of a support 5 occurs in an automatic way, whereas its release is governed manually by an operator.

In said embodiment, associated to the load-bearing structure of the assembly 50 is a first device 60, including an arrest 61, which is able to slide in a linear direction generally transverse to the direction of translation of a support 5 within the receiving space defined by the gantry structure 20. The arrest 61 is guided by a corresponding casing or guide 62, with a spring or other accumulator of mechanical energy that forces the arrest itself into an advanced position, as may be seen in Figure 9. The arrest 61 is connected, via mechanical transmissions 63, to a manually operable lever 64 for bringing the arrest itself into a retracted position. As may be noted, the arrest 61 has an inclined surface 61a at the front, i.e., in a face thereof that faces the outside of the structure 20.

When the trolley 1 is set, for example, at the bay 6a, the support 5 is pushed manually by the operator towards the inside of the space defined by the gantry structure 20. The structure of the support 5 comes into contact with the inclined surface 61a of the arrest 61, causing recession thereof against the action of the aforesaid spring, thus enabling the support 5 to pass onto the rollers 52a of the assembly 50. Preferably provided on the opposite side of the assembly 50 is a second locking device 60, similar to the one visible in Figure 9, which determines a mechanical end-of-travel in regard to translation of the support 5 (in the second device 60 the inclined surface 61a of the corresponding arrest 61 will be set facing the outside of the gantry structure 20). When the overall width of the support 5 passes beyond the arrest 61 of the first device 60, the arrest itself can return into its extracted position, visible in Figure 9, thanks to the action of the corresponding spring. Consequently, in said condition the support 5 is constrained between the arrests 61 of the two devices 60.

When the support is to be unloaded from the trolley 1, and after release of the first system comprising the plates 56, the operator actuates the lever 64 manually, thereby causing recession of the arrest 61 of the corresponding device 60 so as to enable translation of the support 5 leaving the gantry structure 20 thanks to the arrays of rollers 52 and 53.

In the example of embodiment described previously, the supports 5 are received directly on the trolleys 1, in particular when loading and unloading of the supports 5 in/from the corresponding areas of storage and/or use is assisted by equipment such as the bays 6a and 6b of Figure 1 or the interface 10 of Figure 2.

The basic idea of the invention may in any case be applied also in the case of systems for the movement of containers or the like set on specific supports 5 configured as dollies. A case of this sort is described hereinafter with reference to Figures 10-16, where the same reference numbers as those of the previous figures are used again to designate elements that are technically equivalent to the ones already described above.

Figure 10 illustrates by way of example a specific support configured as a dolly, designated as a whole by 70, which is designed to be displaced manually. The structure of the dolly 70 basically consists of a metal base 71, made up for example of welded tubular elements. The base 71 is provided, on the thrust side, with an ergonomic handle 72 to facilitate movement by an operator. Applied underneath the base 71 are four wheels 73. To enable a maximum manoeuvrability all the wheels 73 are swivel wheels according to respective vertical axes.

As may be noted, the base 71 is practically completely open so as to be able to receive thereon a corresponding support or container of components. In the transporting system according to the embodiment discussed here, the dollies 70 are used for displacing supports or containers of components manually along very short paths, for example from a corresponding store to a point of loading of the trolleys 1 close to said store. In such a perspective, in one embodiment the dollies 70 replace the bays 6a and 6b.

Positioning of the support or container to be transported on the dolly 70 can be defined by constraint projections, which rise from the base 71 in peripheral positions. In the example illustrated, two lateral projections 75, two front projections 76, and two rear projections 77 are present for this purpose. In the example, the aforesaid projections have respective inclined surfaces, useful to facilitate positioning of the container on the dolly 70.

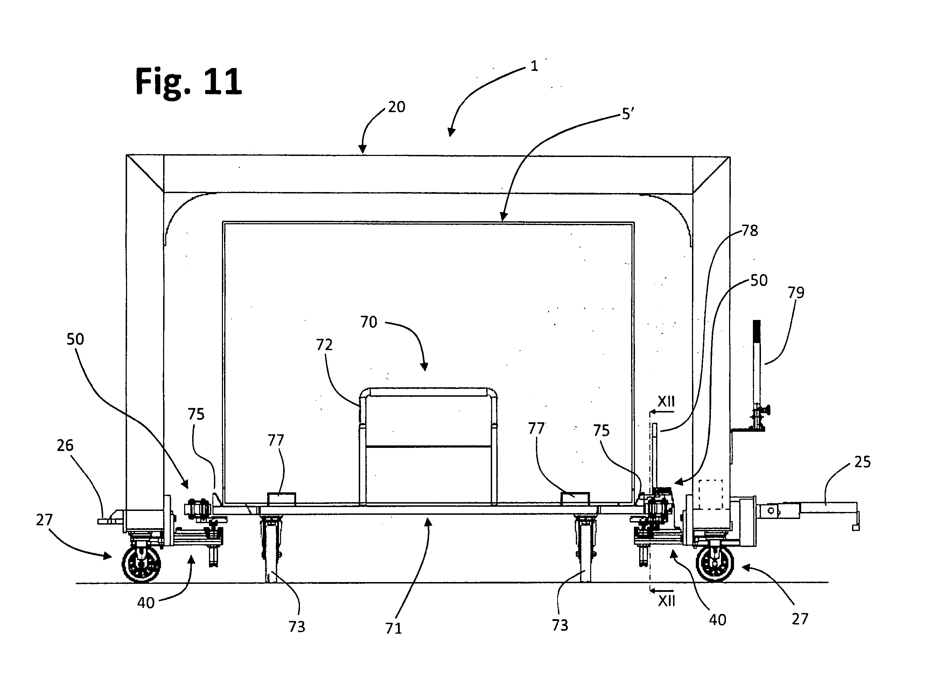

Figure 11 illustrates the case of a dolly 70 bearing a corresponding container 5' basically configured like a box, set within the space defined by the gantry structure 20 of a trolley 1.

Also in this embodiment, the trolley 1 is provided with the respective supporting frames 40, which support in an adjustable way corresponding guide assemblies 50 in order to enable transport of a plurality of basically normalized versions of dollies 70 having a basically standard width W (for example, a width of 1200-1300 mm), but distinguished by different dimensions of length L (for example, 2000 mm, 2200 mm, 2400 mm).

Given that the trolley 1 is provided for supporting a dolly 70 that carries a container or support 5' - instead of supporting directly one such container or support 5, as in the first embodiment - the configuration of the guide assemblies 50 is partially different from the one described previously, it remaining understood that at least one array of rollers and of means of constraint, preferably two different systems of constraint, must be present. As may be noted from Figure 11, on the front side of the trolley 1, i.e., the side provided with the towing hook 25, two levers 78 and 79 are provided for manual actuation of the two aforesaid systems of constraint.

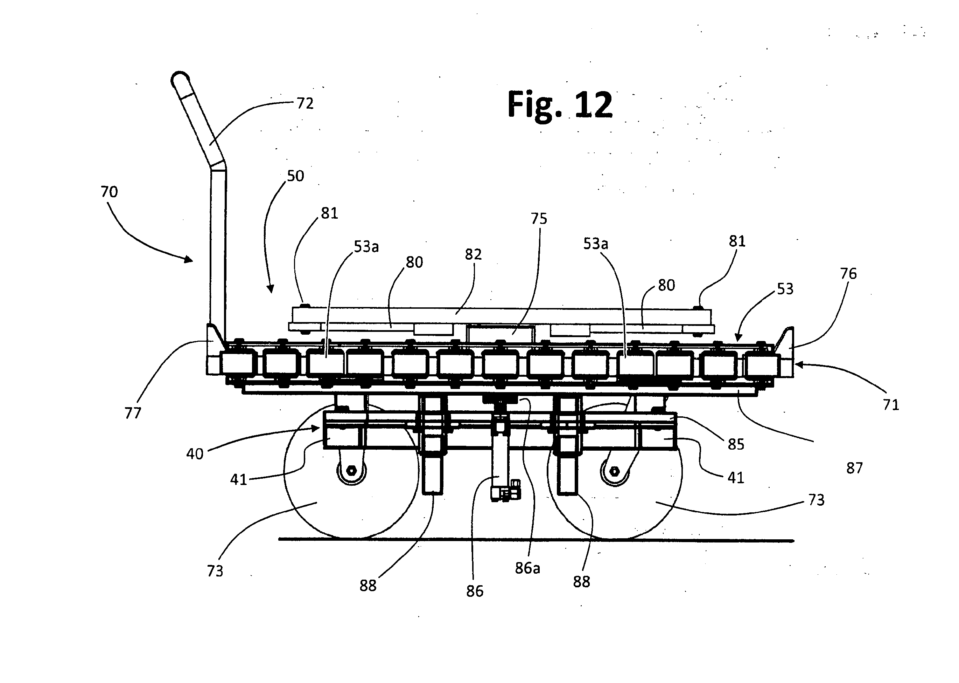

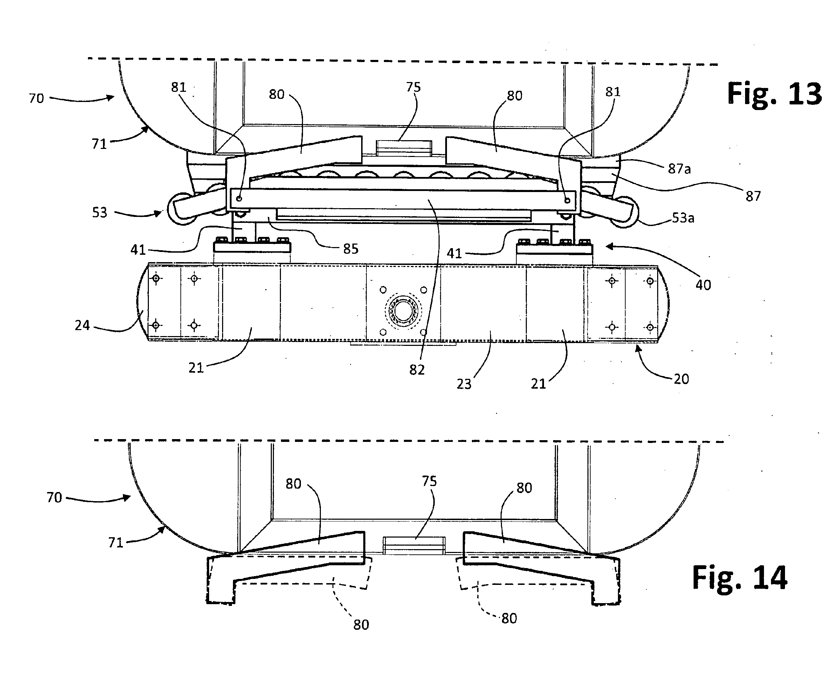

In Figures 12-15, an assembly 50 is illustrated schematically in different views. Said figures illustrate just the elements necessary for an understanding of the invention. In this solution, the assembly 50 comprises a lateral array 53 of rollers 53a. The rollers 53a of the array 53 are able to turn about respective vertical axes, and are designed to guide and contain the base 71 of the dolly 70 laterally during the steps of loading and unloading on the trolley 1, as well as during transport. Advantageously, and as may be clearly seen in Figure 13, the array 53 has two end stretches generally inclined outwards so as to facilitate entry of the base 71 of the dolly 70 with respect to the array 53 itself; for this purpose, moreover, the base 71 is preferably with rounded edges.

A second array of rollers, which is similar to the one designated by 52 with reference to the first embodiment, is not strictly necessary considering that the dollies 70 are provided with wheels 73 of their own, which in themselves facilitate the operations of introduction/extraction of the dollies themselves into/out of the receiving space defined by the gantry structure 20.

The first locking system of the assembly 50 comprises two levers 80, which extend generally in the axial direction of the array of rollers 53, i.e., in the direction of insertion of the dolly 70 into the space defined by the structure 20. The levers 80, which are generally opposed to one another in an axial direction, have a generally flattened configuration and preferably define a respective inclined front surface, being designed to co-operate with surfaces of the dolly 70, in particular with the lateral projections 75 of the base 71, as will emerge hereinafter. The levers 80 are hinged via pins 81 to a mount 82 of the structure of the assembly 50 so as to turn about respective vertical axes, between an operative position, visible in Figures 13 and 14, and an inoperative position, represented with a dashed line in Figure 14.

In one embodiment, the levers 80 are forced by respective means for accumulating mechanical energy towards the aforesaid operative position. With said arrangement, when a dolly 70 is pushed towards the inside of the space defined by the gantry structure 20 (for example, from left to right in Figures 12-14), the base 71 penetrates between the arrays 53 of rollers 53a of the two assemblies 50, being thus guided precisely. The lateral projections 75 of the base 71 hence come in contact with the inclined surface of the lever 80 that faces the insertion side of the dolly 70. In this way, as insertion of the dolly 70 proceeds, the aforesaid lever 80 rotates into the respective inoperative position, as represented by the dashed line for the lever 80 on the left in Figure 14. When the projection 75 has exceeded the distal end of the lever 80, the lever itself returns to the respective operative position thanks to the action of the corresponding means for accumulating mechanical energy. The projection 75 can possibly come into contact with the distal end of the other lever 80, which has remained in its own operative position, thus functioning as mechanical end-of-travel.

In this way, the projection 75 is constrained in position between the distal ends of the two levers 80 of the assembly 50, as may be clearly seen in Figures 13 and 14. It may be noted that, in the example, the area of constraint defined between the two levers 80 is relatively wide, but in the practical embodiment the distal ends of the two levers 80 may be closer to one another in order to define a narrower position of constraint.for the projections 75 of the dolly 70.

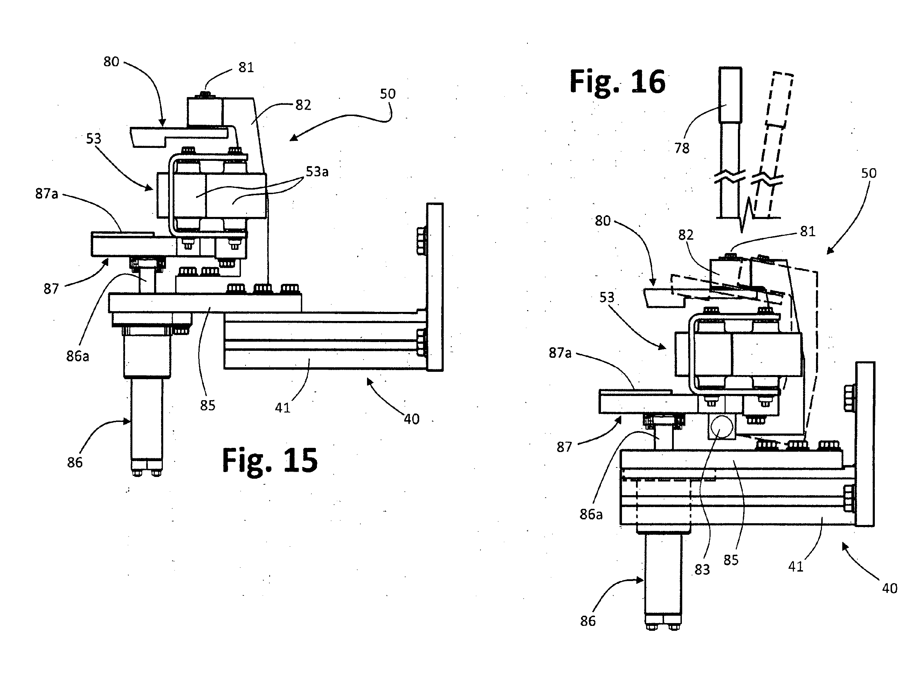

Associated then to the levers 80 of the assembly is a mechanism for manually bringing about disengagement of the projection 75 from the levers themselves. In one embodiment (not represented) the aforesaid mechanism is devised for bringing about recession of the levers 80 from the aforesaid operative position to the aforesaid inoperative position. Said mechanism, which comprises the lever 78 of Figure 11, can be provided in ways in themselves known and be preferably but not necessarily of a bistable type. In a different embodiment, such as the one represented in Figure 16, the mount 82 that supports the levers 80 is connected to a rod 83, carried by the structure of the assembly 50 for turning about a horizontal axis, so that the subassembly comprising the mount 82 and the levers 80 can be rotated backwards and upwards via the lever 78, which is connected to the rod 83. Consequently, also in this embodiment, actuating the lever 78 brings about disengagement of the projection 75 from the levers 80. In one such embodiment the aforesaid assembly is preferably forced into the position represented by a solid line in Figure 16 by means of a spring or the like.

The structure of the assembly 50 moreover includes a resting surface, which can be displaced between a lowered position and a raised position by actuation of the lever 79 of Figure 11. Said resting surface belongs to a second system of constraint of the assembly 50.

As may be seen in particular in Figures 12 and 15, the assembly 50 comprises a base plate 85, used for coupling in an adjustable way to the sectional elements 41 of the supporting frame 40. In this embodiment, the plate 85 is fixed via screws to the sectional elements 41. In order to enable fixing of the assembly 50 in a number of alternative positions on the frame 40, the sectional elements 41 envisage in this case a plurality of threaded fixing holes, which can be selectively engaged by the aforesaid screws according to the position to be assigned to the assembly 50 (a position of adjustment different from that of Figure 15 is exemplified in Figure 16). On the other hand, also in this embodiment, it is possible to provide guide systems and fixing members in a way similar to the first embodiment illustrated.

Associated to the plate 85 is the body of a hydraulic cylinder 86 of a known type, set vertically, the stem 86a of which, by passing into a corresponding opening of the plate 85, is coupled to a second plate 87, mounted movable with respect to the plate 85. Preferably, moreover set between the plates 85 and 87 are vertical linear guides, represented by way of example only in Figure 12, where they are designated by 88. The guides 88 may be of any known type and in the example comprise a stationary part, fixed with respect to the plate 85, and a movable part, fixed with respect to the plate 87 and constrained to the corresponding stationary part so as to be vertically displaceable. In this embodiment, in order to enable a degree of adjustment of the assembly 50 on the corresponding frame 40 that is as extensive as possible, the frame 40 may be without a front cross member, as in the case exemplified.

The cylinder 86 is driven via an oleodynamic pump with corresponding tank, which can be actuated by means of the lever 79 of Figure 11. In the figures the aforesaid pump and the corresponding tank are not represented in so far as they are of a type in itself known; likewise, nor are the corresponding hydraulic connections represented. In general terms, the pump and the tank can be mounted on the corresponding cross member 24 of the structure 20 (as indicated by way of example by a dashed line in Figure 11) or else be supported directly by the structure of the assembly 50. Of course, the manual-actuation lever 79 can be replaced by a pedal. The array 53 of rollers 53a and/or the mount for the levers 81 can be associated to the plate 87.

As may be readily understood, the vertically movable plate 87 defines the resting surface referred to previously, which can be displaced between a lowered position and a raised position and be designed to interact with the frame 71 of the dolly 70. For said purpose, preferably provided on the top face of the plate 87 is a laminar element 87a made of resilient material, for example rubber.

After the dolly 70 has been introduced into the receiving space defined by the gantry structure 20 and constrained in position via the system comprising the levers 80, the resting surface defined by the plate 87 is at a lower height than the bottom face of the lateral sectional elements of the base 71 of the dolly 70. At this point, the operator can operate the aforesaid pump, by means of the lever 79. In this way, the cylinder 86 causes raising of the resting surface represented by the plate 87. In the course of raising, the resilient element 87a comes into contact with the bottom face of the longitudinal members of the base 71 of the dolly 70, holding it in position and, as the raising operation proceeds, the plate 87 lifts the dolly 70.

Lifting of the dolly 70 can be relatively modest, for example in the region of 3-5 cm, sufficient to cause a corresponding raising of the wheels 73 of the dolly 70 with respect to the ground. In this way, the trolley 1 can be moved in the ways described above up to the unloading point, without the wheels resting on the ground and/or supporting the weight of the container 5' and of the dolly itself (said weight being entirely supported by the wheels 27 of the trolley 1). In the unloading point the operator merely has to operate the aforesaid pump in a way opposite to the one described previously, i.e., bring about lowering of the plate 87 until the wheels 73 of the dolly 70 come to rest once again on the ground. Next, the operator, by acting on the lever 78, causes disengagement of the levers 80 with respect to the lateral projection 75 in the ways described previously, and then pushes the dolly 70 via the handle 72 towards the outside of the space defined by the gantry structure 20. Exit of the dolly 70 from the aforesaid space is appropriately guided by the arrays 53 of rollers of the two assemblies 50.

For example, the operator can actuate the lever 78 with one hand and push the dolly 70 with the other hand. In possible variant embodiments, also the mechanism of actuation of the system of constraint comprising levers can be of a bistable type so that the condition of disengagement of the levers 80 from the projection 75 will be maintained by the system until a new actuation of the lever 78. Consequently, in said embodiment the operator can use both hands to push the dolly 70.

Also in the second embodiment it is not strictly indispensable for both of the assemblies 50 of a trolley 1 to be mounted in an adjustable way with respect to the structure 20, even though this is preferable.

In the case exemplified in Figure 11, just the assembly 50 close to the front of the trolley 1 is provided with the two systems of constraint described above, the assembly 50 close to the back of the trolley 1 having just the second system of constraint. In such an embodiment, the system of supply of the cylinder 86 of the second assembly 50 can be connected to the pump via suitable pipes (not represented), which extend along two uprights and a longitudinal member of one of the frames of the structure 20 so that one and the same pump and one and the same lever 79 will drive the two cylinders 86. Alternatively, also the second assembly 50 can be provided with a pump and a lever 79 of its own (and possibly the corresponding system of constraint comprising levers 80 and 78).

It is also possible to equip the second assembly 50 with just the array 53 of rollers, without systems of constraint. In such an embodiment, preferably lifting of the dolly 70 that can be obtained at the assembly 50 provided in the front area of the trolley 1 will be by an amount such as to cause a slight inclination of the dolly 70 and/or a minimum lifting of the wheels 73 at said second assembly 50. The weight of the dolly 70 and its load will in any case enable a stable positioning during transport to be obtained.

It is clear that numerous variations to the transporting system described herein by way of example are possible for any person skilled in the art, without thereby departing from the scope of the present invention as defined by the ensuing claims.

In a possible variant (not shown), the longitudinal sectional elements of one or more of the supporting frames 40 could be of a telescopic type in order to enable the adjustment referred to previously.

## Claims

1. A system for transporting components in an industrial plant, comprising:
- at least one trolley (1), prearranged for coupling to a motor-driven towing vehicle (2); and
- a plurality of supports for components (5; 70), each support being coupleable in a detachable way to the at least one trolley (1) for being transported thereby,
wherein the trolley (1) has a basically gantry-like load-bearing structure (20), for defining a space for receiving a said support (5; 70) to be transported, the trolley (1) comprising in particular front steering wheels (27) and rear steering wheels (27) associated to the gantry structure (20), the front wheels (27) and the rear wheels (27) being connected via a transmission system (28-31) for steering in a synchronized way, the trolley (1) further comprising at least two generally opposed guide assemblies (50), mounted in generally facing positions of the gantry structure (20) within said receiving space, at least one guide assembly (50) including constraint means, for constraining said support (5; 70) in a transporting position basically predefined with regard to the gantry structure (20), **characterized in that** each guide assembly (50) moreover includes at least one respective array of rollers (52, 53), the rollers (52a, 53a) of each array (52, 53) being designed to interact with surfaces of said support (5; 70) for guiding insertion and extraction thereof into/from said receiving space on both sides of the gantry structure (20), and **in that** at least one guide assembly (50), or each guide assembly (50), is mounted in an adjustable way with respect to the gantry structure (20) to enable variation of the distance between the guide assemblies (50), in particular to enable transport of supports (5; 70) of different dimensions.

2. The transporting system according to Claim 1, wherein at least one guide assembly (50), or each guide assembly (50), is coupled to a corresponding supporting frame (40) which is fixed with respect to the gantry structure (20) and basically projects in cantilever fashion towards the inside of said receiving space, the supporting frame (40) being configured for fixing thereon the corresponding guide assembly (50) in a plurality of alternative positions.

3. The transporting system according to Claim 2, wherein the supporting frame (40) comprises one or more longitudinally extending metal sectional elements (41, 43, 44) projecting towards the inside of said receiving space.

4. The transporting system according to Claim 3, wherein the sectional elements (41, 43, 44) comprise or define linear guides (41, 44), and wherein the guide assembly (50) is slidably coupled to said guides and can be secured thereon in said alternative positions.

5. The transporting system according to Claim 1 or Claim 2, wherein said constraint means comprise a system of constraint (55-56; 79, 86-88), in particular mechanically operated and/or hydraulically operated, comprising a governing member (55; 79) that can be actuated by an operator for constraining said support (5; 70) in said transporting position after its insertion in said receiving space, the governing member (55; 79) being subsequently operable by an operator for releasing said support (5; 70) from said transporting position, for its extraction from said receiving space.

6. The transporting system according to Claim 1 or else Claim 5, wherein said constraint means comprise a constraint arrangement (57-58, 60-64; 78, 80), in particular of a mechanical type, which is able to assume in an automatic way a respective operative position, for withholding said support (5; 70), after insertion of the support itself in said receiving space.

7. The transporting system according to Claim 6, wherein the constraint arrangement (57-58) is able to assume in a basically automatic way a respective inoperative position, where it does not withhold said support (5; 70), following upon interaction of a part thereof (78) with a fixed contrast (12) set at a loading or unloading station (6a, 6b, 10) of the support (5).

8. The transporting system according to Claim 6, wherein the constraint arrangement (60-64; 78, 80) comprises a governing member (64; 78) that can be operated by an operator for bringing the arrangement itself into a respective inoperative position, where it does not withhold said support (5; 70).

9. The transporting system according to Claim 5, wherein the system of constraint (55-56; 79, 86-88) comprises one of:
- one or more blocking elements (56) configured for constraining in a selective way said support (5) with respect to the rollers (52a, 53a) of said array of rollers (52, 53);
- an arrangement (86-88) for lifting the support (70), in particular a hydraulically operated one.

10. The transporting system according to Claim 9, wherein the supports (5; 70) comprise dollies (70) provided with respective wheels (73), the lifting arrangement (86-88) being operable for lifting the dolly (70) to a height such that at least some of its wheels (73) are not in contact with the ground.

11. The transporting system according to Claim 6, wherein the constraint arrangement (57-58, 60-64; 78, 80) comprises one from among:
- an arrest device (57), pivoted to the structure of the guide assembly (50) for turning according to a basically horizontal axis (57a) and comprising at least one axially extending arrest (58), the at least one arrest (58) being provided for assuming a first angular position where a portion thereof hinders translation of the support (5) on the rollers (52a) of a respective array of rollers (52) of the guide assembly (50), the at least one arrest (58) being able to assume a second angular position where said portion does not hinder said translation;
- a locking device (60) associated to the structure of the guide assembly (50) and including an arrest (61) that is able to slide in a linear direction generally transverse to a direction of translation of the support (5) on the rollers (52a) of a respective array of rollers (52) of the guide assembly (50), the arrest (61) being forced by means for accumulating mechanical energy into an advanced position, where it hinders said translation of the support (5), the arrest (61) having an inclined plane (61a) in a face thereof that faces the outside of said receiving space of the gantry structure (20);
- a pair of levers (80) that extend generally in the direction of insertion or extraction of the container (70) into/from the receiving space of the gantry structure (20), the levers (80) being generally opposed to one another in an axial direction and each having a front surface which is able to interact with a lateral projection (75) of said support (70), the levers (80) being hinged to the structure of the guide assembly (50) for turning about respective vertical axes between an advanced position and a retracted position, the facing ends of the two levers (80) delimiting between them a region of constraint for said lateral projection (75), each lever (80) being forced by means for accumulating mechanical energy towards said advanced position and being able to assume the respective retracted position following upon interaction of the lateral projection (75) with said front surface, in the course the introduction of said support (70) towards the inside of said receiving space of the gantry structure (20)

12. The transporting system according to any one of the preceding claims, wherein at least one guide assembly (50), or each guide assembly (50), comprises a lower array of rollers (52) and a lateral array of rollers (53), the rollers (52a) of the lower array (52) being able to turn about respective horizontal axes and being designed to sustain from beneath said support (5), as well as to facilitate translation thereof during loading or unloading on/off the trolley (1), the rollers (53a) of the side array (53) being able to turn about respective vertical axes and being designed to guide and contain the support (5; 70) laterally in the course of the loading and unloading steps and in the course of transport.

13. The transporting system according to any one of the preceding claims, wherein at at least one of a support loading station (3) and a support unloading station (4; 10), a guide is provided on the ground (8), for bringing about alignment of the trolleys (1) with respect to equipment (6a, 6b, 10) for loading or unloading the supports (5) on/off the trolleys themselves.

14. The transporting system according to any one of the preceding claims, wherein at at least one between a support loading station (3) and a support unloading station (4; 10) there is provided a charging bay (6a), respectively a discharging bay (6b), comprising a plurality of rollers (15a, 16), which are able to turn according to respective basically horizontal axes and are set for defining a plane of translation for the supports (5), said plane of translation being generally inclined to enable a basically autonomous translation of the supports (5) between an inlet end (11) and an outlet end (12) of the bay (6a, 6b), each trolley (1) being positionable alongside the bay (6a, 6b) with the respective receiving space generally facing and aligned with respect to the outlet end of the bay itself in such a way that a support (5) leaving the bay (6a, 6b) can be received between the guide assemblies (50) of the trolley (1).

15. The transporting system according to Claim 14, wherein said bay (6a, 6b) comprises at least one from among:
- two opposed arrays (15) of said rollers (15a, 16), which are generally mutually parallel, at least one said array (15) including one or more braking rollers (16) for local deceleration of the translation of the supports (5) from the inlet end (11) to the outlet end (12) of the bay (6a, 6b);
- an arrest assembly (9), associated to a stationary structure of the bay (6a, 6b) in a position basically corresponding to its outlet end, to arrest translation of the supports (5) on the rollers (15a, 16) of said plurality, the arrest assembly (9) being manually operable to bring about displacement of an arrest element thereof (9b) between an operative position and an inoperative position, where the arrest element (9b) interferes and does not interfere, respectively, with the passage of a support (5) through the outlet end of the bay (6a, 6b); and
- at least one spacing assembly (17), aimed at enabling temporary storage on the bay (6a, 6b) of at least one first support (5) and one second support (5), at the same time enabling the second support (5), which is closer to the inlet end of the bay, to be kept in position during the step of unloading of the first support (5), which is closer to the outlet end of the bay, from the bay, the spacing assembly (17) comprising in particular a lever (18), articulated in an intermediate area thereof to a stationary structure of the bay, the lever (18) having at a first end an operating part (18b) and at the second end an arrest part (18c), the operating part being able to interact with the first support (5) in the course of its translation towards the outlet end of the bay for bringing about an angular movement of the lever (18) such that the arrest part thereof (18c) stops the second support (5) in the course of its translation towards the outlet end of the bay (6a, 6b).

## Patentansprüche

1. System zum Transportieren von Bauteilen in einer Industrieanlage, das umfasst:
wenigstens einen Wagen (1), der zum Koppeln mit einem motorgetriebenen Transportfahrzeug (2) eingerichtet ist; und
eine Vielzahl von Auflagen für Bauteile (5; 70), wobei jede Auflage lösbar mit dem wenigstens einen Wagen (1) gekoppelt werden kann, um sie damit zu transportieren,
wobei der Wagen (1) eine im Wesentlichen portalartige tragende Struktur (20) aufweist, die einen Raum zum Aufnehmen der zu transportierenden Auflage (5; 70) bildet, der Wagen (1) im Einzelnen vordere Lenkräder (27) und hintere Lenkräder (27) umfasst, die mit der Portalstruktur (20) verbunden sind, die vorderen Räder (27) und die hinteren Räder (27) über ein Getriebesystem (28, 31) zum synchronen Lenken verbunden sind, der Wagen (1) des Weiteren wenigstens zwei im Allgemeinen einander gegenüberliegende Führungsbaugruppen (50) umfasst, die an im Allgemeinen einander zugewandten Positionen der Portalstruktur (20) innerhalb des Aufnahmeraums angebracht sind, wenigstens eine Führungsbaugruppe (50) Halteeinrichtungen enthält, mit denen die Auflage (5; 70) in einer Transportposition gehalten wird, die im Wesentlichen in Bezug auf die Portalstruktur (20) vorgegeben ist, **dadurch gekennzeichnet, dass** jede Führungsbaugruppe (50) des Weiteren wenigstens eine entsprechende Gruppe von Rollen (52, 53) enthält, die Rollen (52a, 53a) jeder Gruppe (52, 53) dazu dienen, mit Flächen der Auflage (5; 70) in Wechselwirkung zu treten, um Einfahren und Ausfahren derselben in den/aus dem Aufnahmeraum auf beiden Seiten der Portalstruktur (20) zu führen, und dadurch, dass wenigstens eine Führungsbaugruppe (50) oder jede Führungsbaugruppe (50) in Bezug auf die Portalstruktur (20) verstellbar angebracht ist, um Änderung des Abstandes zwischen den Führungsbaugruppen (50) zu ermöglichen und insbesondere Transport von Auflagen (5; 70) unterschiedlicher Abmessungen zu ermöglichen.

2. Transportsystem nach Anspruch 1, wobei wenigstens eine Führungsbaugruppe (50) oder jede Führungsbaugruppe (50) mit einem entsprechenden Tragerahmen (40) verbunden ist, der in Bezug auf die Portalstruktur (20) feststehend ist und im Wesentlichen auslegerartig zur Innenseite des Aufnahmeraums hin vorsteht, und der Tragerahmen (40) zum Befestigen der entsprechenden Führungsbaugruppe (50) daran in einer Vielzahl alternativer Positionen eingerichtet ist.

3. Transportsystem nach Anspruch 2, wobei der Tragerahmen (40) ein oder mehrere sich in Längsrichtung erstreckende Metall-Profilelement/e (41, 43, 44) umfasst, das/die zur Innenseite des Aufnahmeraums hin vorsteht/vorstehen.

4. Transportsystem nach Anspruch 3, wobei die Profilelemente (41, 43, 44) Linearführungen (41, 44) umfassen oder bilden, und die Führungsbaugruppe (50) verschiebbar mit den Führungen gekoppelt ist und in den alternativen Position daran befestigt werden kann.

5. Transportsystem nach Anspruch 1 oder Anspruch 2, wobei die Halteeinrichtung ein Haltesystem (55-56; 79, 86-88), insbesondere ein mechanisch betätigtes und/oder hydraulisch betätigtes System, umfasst, das ein Steuerelement (55; 79) umfasst, das von einer Bedienungsperson betätigt werden kann, um die Auflage (5; 70) nach ihrem Einfahren in den Aufnahmeraum in der Transportposition zu halten, wobei das Steuerelement (55; 79) anschließend von einer Bedienungsperson bedient werden kann, um die Auflage (5; 70) zum Ausfahren derselben aus dem Aufnahmeraum aus der Transportposition zu lösen.

6. Transportsystem nach Anspruch 1 oder ansonsten Anspruch 5, wobei die Halteeinrichtung eine Halteanordnung (57-58, 60-64; 78, 80), insbesondere eine mechanische Anordnung, umfasst, die automatisch eine entsprechende Funktionsposition einnehmen kann, um die Auflage (5; 70) nach Einfahren der Auflage selbst in den Aufnahmeraum zurückzuhalten.

7. Transportsystem nach Anspruch 6, wobei die Halteanordnung (57-58) auf Wechselwirkung eines Teils (78) derselben mit einem feststehenden Gegenstück (12) hin, das an einer Belade- oder Entladestation (6a, 6b, 10) der Auflage (5) angeordnet ist, im Wesentlichen automatisch eine entsprechende Ruheposition einnehmen kann, in der sie die Auflage (5; 70) nicht zurückhält.

8. Transportsystem nach Anspruch 6, wobei die Halteanordnung (60-64; 78, 80) ein Steuerelement (64; 78) umfasst, das von einer Bedienungsperson bedient werden kann, um die Anordnung selbst in eine entsprechende Ruheposition zu bringen, in der sie die Auflage (5; 70) nicht zurückhält.

9. Transportsystem nach Anspruch 5, wobei das Haltesystem (55-56; 79, 86-88) umfasst:
ein oder mehrere Sperrelement/e (56), das/die so eingerichtet ist/sind, dass es/sie die Auflage (5) selektiv in Bezug auf die Rollen (52a, 53a) der Gruppe von Rollen (52, 53) hält/halten, oder
eine Anordnung (86-88) zum Anheben der Auflage (70), insbesondere ein hydraulisch betätigte Anordnung.

10. Transportsystem nach Anspruch 9, wobei die Auflagen (5; 70) Transportwagen (70) umfassen, die mit entsprechenden Rädern (73) versehen sind, und die Hebeanordnung (86-88) so betrieben werden kann, dass der Transportwagen (70) an eine Höhe angehoben wird, in der wenigstens einige seiner Räder (73) nicht in Kontakt mit dem Boden sind.

11. Transportsystem nach Anspruch 6, wobei die Halteanordnung (57-58, 60-64; 78, 80) umfasst:
eine Arretiervorrichtung (57), die drehbar an der Struktur der Führungsbaugruppe (50) angebracht ist und sich um eine im Wesentlichen horizontale Achse (57a) dreht und wenigstens eine sich axial erstreckende Arretierung (58) umfasst, wobei die wenigstens eine Arretierung (58) so eingerichtet ist, dass sie eine erste Winkelposition einnimmt, in der ein Abschnitt derselben Verschiebung der Auflage (5) auf den Rollen (52a) einer entsprechenden Gruppe von Rollen (52) der Führungsbaugruppe (50) verhindert, und die wenigstens eine Arretierung (58) eine zweite Winkelposition einnehmen kann, in der der Abschnitt die Verschiebung nicht verhindert;
eine Verriegelungsvorrichtung (60), die mit der Struktur der Führungsbaugruppe (50) verbunden ist und eine Arretierung (61) enthält, die in einer linearen Richtung im Allgemeinen quer zu einer Richtung von Verschiebung der Auflage (5) auf den Rollen (52a) einer entsprechenden Gruppe von Rollen (52) der Führungsbaugruppe (50) gleiten kann, wobei die Arretierung (61) von einer Einrichtung zum Akkumulieren mechanischer Energie in eine ausgefahrene Position gedrückt wird, in der sie Verschiebung der Auflage (5) verhindert, und die Arretierung (61) an einer Vorderseite derselben eine geneigte Ebene (61 a) aufweist, die von dem Aufnahmeraum der Portalstruktur (20) nach außen gewandt ist, oder
ein Paar Hebel (80), die sich im Allgemeinen in der Richtung zum Einfahren oder Ausfahren des Behälters (70) in den/aus dem Aufnahmeraum der Portalstruktur (20) erstrecken, wobei die Hebel (80) einander allgemein in einer axialen Richtung gegenüberliegen und sie jeweils eine vordere Fläche haben, die mit einem seitlichen Vorsprung (75) der Auflage (70) in Wechselwirkung kommen kann, die Hebel (80) an der Struktur der Führungsbaugruppe (50) drehbar gelagert sind und sich um entsprechende vertikale Achsen zwischen einer ausgefahrenen Position und einer eingefahrenen Position drehen, zwischen den einander zugewandten Enden der zwei Hebel (80) ein Haltebereich für den seitlichen Vorsprung (75) eingegrenzt wird, jeder Hebel (80) durch eine Einrichtung zum Akkumulieren mechanischer Energie auf die ausgefahrene Position zu gedrückt wird und im Verlauf des Einfahrens der Auflage (70) in das Innere des Aufnahmeraums der Portalstruktur (20) auf Wechselwirkung des seitlichen Vorsprungs (75) mit der vorderen Fläche hin die jeweilige eingefahrene Position einnehmen kann.

12. Transportsystem nach einem der vorangehenden Ansprüche, wobei wenigstens eine Führungsbaugruppe (50) oder jede Führungsbaugruppe (50) eine untere Gruppe von Rollen (52) sowie eine seitliche Gruppe von Rollen (53) umfasst, sich die Rollen (52a) der unteren Gruppe (52) um jeweilige horizontale Achsen herum drehen können und dazu dienen, die Auflage (5) von unten zu stützen und Verschiebung derselben beim Aufladen oder Abladen auf/von den/dem Transportwagen (1) zu erleichtern, und sich die Rollen (53a) der seitlichen Gruppe (53) um jeweilige vertikale Achsen herum drehen können und dazu dienen, die Auflage (5; 70) während der Auf- und Abladeschritte und während des Transports zu führen und seitlich zu halten.

13. Transportsystem nach einem der vorangehenden Ansprüche, wobei an einer Auflagen-Aufladestation (3) oder/und einer Auflagen-Abladestation (4; 10) eine Führung auf dem Boden (8) vorhanden ist, mit der die Transportwagen (1) in Bezug auf Einrichtungen (6a, 6b, 10) zum Auf- oder Abladen der Auflagen (5) auf die/von den Transportwagen selbst ausgerichtet werden.

14. Transportsystem nach einem der vorangehenden Ansprüche, wobei zwischen einer Auflagen-Aufladestation (3) und einer Auflagen-Abladestation (4; 10) ein Beschickungsgestell (6a) bzw. ein Entnahmegestell (6b) vorhanden ist, das eine Vielzahl von Rollen (15a, 16) umfasst, die sich um jeweilige im Wesentlichen horizontale Achsen herum drehen können und so angeordnet sind, dass sie eine Verschiebungsebene für die Auflagen (5) bilden, wobei die Verschiebungsebene im Allgemeinen geneigt ist, um eine im Wesentlichen unabhängige Verschiebung der Auflagen (5) zwischen einem Einlassende (11) und einem Auslassende (12) des Gestells (6a, 6b) zu ermöglichen, und jeder Transportwagen (1) an dem Gestell (6a, 6b) so positioniert werden kann, dass der jeweilige Aufnahmeraum im Allgemeinen dem Auslassende des Gestells selbst zugewandt und in Bezug darauf so ausgerichtet ist, dass eine Auflage (5), die das Gestell (6a, 6b) verlässt, zwischen den Führungsbaugruppen (50) des Transportwagens (1) aufgenommen werden kann.

15. Transportsystem nach Anspruch 14, wobei das Gestell (6a, 6b) umfasst:
zwei einander gegenüberliegende Gruppen (15) der Rollen (15a, 16), die im Allgemeinen parallel zueinander sind, wobei wenigstens eine der Gruppen (15) eine oder mehrere Bremsrolle/n (16) zum lokalen Verlangsamen der Verschiebung der Auflagen (5) von dem Einlassende (11) zu dem Auslassende (12) des Gestells (6a, 6b) enthält;
eine Arretierbaugruppe (9), die mit einer stationären Struktur des Gestells (6a, 6b) an einer Position verbunden ist, die im Wesentlichen seinem Auslassende entspricht, um Verschiebung der Auflagen (5) auf den Rollen (15a, 16) der Vielzahl aufzuhalten, wobei die Arretierbaugruppe (9) manuell betätigt werden kann, um Verschiebung eines Arretierelementes (9b) derselben zwischen einer Funktionsposition und einer Ruheposition zu bewirken, in denen das Arretierelement (9b) den Durchgang einer Aufnahme (5) durch das Auslassende des Gestells (6a, 6b) behindert bzw. nicht behindert; oder/und
wenigstens eine Abstandshaltebaugruppe (17), die dazu dient, vorübergehende gleichzeitige Aufbewahrung einer ersten Auflage (5) oder/und einer zweiten Auflage (5) auf dem Gestell (6a, 6b) zu ermöglichen, und gleichzeitig zu ermöglichen, dass die zweite Auflage (5), die sich näher an dem Einlass des Gestells befindet, während des Schrittes des Abladens der ersten Auflage (5), die sich näher an dem Auslassende des Gestells befindet, von dem Gestell in Position gehalten wird, wobei die Abstandshaltebaugruppe insbesondere einen Hebel (18) umfasst, der in einem Mittelbereich desselben gelenkig an einer stationären Struktur des Gestells gelagert ist, der Hebel (18) an einem ersten Ende einen Betätigungsteil (18b) und an dem zweiten Ende einen Arretierteil (18c) hat, und Betätigungsteil mit der ersten Auflage (5) während ihrer Verschiebung zu dem Auslassende des Gestells hin in Wechselwirkung treten kann, um eine Winkelbewegung des Hebels (18) zu bewirken, so dass der Arretierteil (18c) desselben die zweite Auflage (5) während ihrer Verschiebung zu dem Auslassende des Gestells (6a, 6b) hin anhält.

## Revendications

1. Système pour transporter des composants dans une installation industrielle, comprenant :
au moins un chariot (1), pré-agencé pour se coupler à un véhicule tracteur entraîné par moteur (2) ; et
une pluralité de supports pour composants (5; 70), chaque support pouvant être couplé d'une manière détachable au au moins un chariot (1) pour être transporté par ce dernier,
dans lequel le chariot (1) a une structure porteuse (20) essentiellement du type à portique, pour définir un espace afin de recevoir ledit support (5 ; 70) à transporter, le chariot (1) comprenant, en particulier, des roues directrices avant (27) et des roues directrices arrière (27) associées à la structure de portique (20), les roues avant (27) et les roues arrière (27) étant raccordées via un système de transmission (28-31) pour la direction d'une manière synchronisée, le chariot (1) comprenant en outre au moins deux ensembles de guidage (50) généralement opposés, montés dans des positions se faisant généralement face de la structure de portique (20) à l'intérieur dudit espace de réception, au moins un ensemble de guidage (50) comprenant des moyens de contrainte pour contraindre ledit support (5 ; 70) dans une position de transport essentiellement prédéfinie par rapport à la structure de portique (20),
**caractérisé en ce que** chaque ensemble de guidage (50) comprend, de plus, au moins un groupe respectif de rouleaux (52, 53), les rouleaux (52a, 53a) de chaque groupe (52, 53) étant conçus pour interagir avec les surfaces dudit support (5; 70) pour guider son insertion et son extraction dans/dudit espace de réception des deux côtés de la structure de portique (20), et **en ce qu'**au moins un ensemble de guidage (50) ou chaque ensemble de guidage (50) est monté d'une manière ajustable par rapport à la structure de portique (20) pour permettre la modification de la distance entre les ensembles de guidage (50), en particulier pour permettre le transport de supports (5 ; 70) de différentes dimensions.

2. Système de transport selon la revendication 1, dans lequel, au moins un ensemble de guidage (50) ou chaque ensemble de guidage (50) est couplé à un châssis de support (40) correspondant qui est fixe par rapport à la structure de portique (20) et fait saillie essentiellement en porte-à-faux vers l'intérieur dudit espace de réception, le châssis de support (40) étant configuré pour fixer sur ce dernier l'ensemble de guidage (50) correspondant dans une pluralité de positions en variante.

3. Système de transport selon la revendication 2, dans lequel le châssis de support (40) comprend un ou plusieurs éléments transversaux métalliques (41, 43, 44) s'étendant de manière longitudinale, faisant saillie vers l'intérieur dudit espace de réception.

4. Système de transport selon la revendication 3, dans lequel les éléments transversaux (41, 43, 44) comprennent ou définissent des guides linéaires (41, 44), et dans lequel l'ensemble de guidage (50) est couplé de manière coulissante auxdits guides et peut être fixé sur ces derniers dans lesdites positions en variante.

5. Système de transport selon la revendication 1 ou la revendication 2, dans lequel lesdits moyens de contrainte comprennent un système de contrainte (55-56 ; 79, 86-88), en particulier actionné mécaniquement et/ou actionné hydrauliquement, comprenant un élément de commande (55 ; 79) qui peut être actionné par un opérateur pour contraindre ledit support (5 ; 70) dans ladite position de transport après son insertion dans ledit espace de réception, l'élément de commande (55 ; 79) pouvant être en suite actionné par un opérateur pour libérer ledit support (5 ; 70) de ladite position de transport, pour son extraction dudit espace de réception.

6. Système de transport selon la revendication 1 ou la revendication 5, dans lequel lesdits moyens de contrainte comprennent un agencement de contrainte (57-58, 60-64 ; 78, 80), en particulier d'un type mécanique, qui peut prendre, d'une manière automatique, une position opérationnelle respective, pour supporter ledit support (5 ; 70), après l'insertion du support lui-même dans ledit espace de réception.

7. Système de transport selon la revendication 6, dans lequel l'agencement de contrainte (57-58) peut prendre, d'une manière essentiellement automatique, une position non opérationnelle respective dans laquelle il ne supporte pas ledit support (5 ; 70), suite à l'interaction d'une partie (78) de ce dernier avec un contraste fixe (12) déterminé au niveau d'une station de chargement ou de déchargement (6a, 6b, 10) du support (5).

8. Système de transport selon la revendication 6, dans lequel l'agencement de contrainte (60-64 ; 78, 80) comprend un élément de commande (64 ; 78) qui peut être actionné par un opérateur pour amener l'agencement lui-même dans une position non opérationnelle respective dans laquelle il ne supporte pas ledit support (5 ; 70).

9. Système de transport selon la revendication 5, dans lequel le système de contrainte (55-56 ; 79, 86-88) comprend l'un parmi :
un ou plusieurs éléments de blocage (56) configurés pour contraindre, d'une manière sélective, ledit support (5) par rapport aux rouleaux (52a, 53a) dudit groupe de rouleaux (52, 53) ;
un agencement (86-88) pour lever le support (70), en particulier un agencement actionné hydrauliquement.

10. Système de transport selon la revendication 9, dans lequel les supports (5 ; 70) comprennent des chariots à roulettes (70) prévus avec des roues (73) respectives, l'agencement de levage (86-88) pouvant être actionné pour lever le chariot à roulettes (70) à une hauteur telle, qu'au moins certaines de ses roues (73) ne sont pas en contact avec le sol.

11. Système de transport selon la revendication 6, dans lequel l'agencement de contrainte (57-58, 60-64 ; 78, 80) comprend entre autres :
un dispositif d'arrêt (57) pivoté par rapport à la structure de l'ensemble de guidage (50) pour tourner selon un axe essentiellement horizontal (57a) et comprenant au moins un arrêt (58) s'étendant de manière axiale, le au moins un arrêt (58) étant prévu pour prendre une première position angulaire dans laquelle une partie de ce dernier gêne la translation du support (5) sur les rouleaux (52a) d'un groupe respectif de rouleaux (52) de l'ensemble de guidage (50), le au moins un arrêt (58) pouvant prendre une seconde position angulaire dans laquelle ladite partie ne gêne pas ladite translation ;
un dispositif de blocage (60) associé à la structure de l'ensemble de guidage (50) et comprenant en arrêt (61) qui peut coulisser dans une direction linéaire généralement transversale à une direction de translation du support (5) sur les rouleaux (52a) d'un groupe respectif de rouleaux (52) de l'ensemble de guidage (50), l'arrêt (61) étant forcé par des moyens pour accumuler l'énergie mécanique dans une position avancée, dans laquelle il gêne ladite translation du support (5), l'arrêt (61) ayant un plan incliné (61 a) dans sa face qui est orientée vers l'extérieur dudit espace de réception de la structure de portique (20) ;
une paire de leviers (80) qui s'étendent généralement dans la direction d'insertion ou d'extraction d'un récipient (70) dans/de l'espace de réception de la structure de portique (20), les leviers (80) étant généralement opposés entre eux, dans une direction axiale et chacun ayant une surface avant qui peut interagir avec une saillie latérale (75) dudit support (70), les leviers (80) étant articulés par rapport à la structure de l'ensemble de guidage (50) pour tourner autour d'axes verticaux respectifs entre une position avancée et une position rétractée, les extrémités en vis-à-vis des deux leviers (80) délimitant entre elles une région de contrainte pour ladite saillie latérale (75), chaque levier (80) étant forcé par des moyens pour accumuler l'énergie mécanique vers ladite position avancée et pouvant prendre la position rétractée respective suite à l'interaction de la saillie latérale (75) avec ladite surface avant, au cours de l'introduction dudit support (70) vers l'intérieur dudit espace de réception de la structure de portique (20).

12. Système de transport selon l'une quelconque des revendications précédentes, dans lequel au moins un ensemble de guidage (50) ou chaque ensemble de guidage (50) comprend un groupe inférieur de rouleaux (52) et un groupe latéral de rouleaux (53), les rouleaux (52a) du groupe inférieur (52) pouvant tourner autour d'axes horizontaux respectifs et étant conçus pour soutenir, de dessous, ledit support (5) ainsi que pour faciliter leur translation pendant le chargement ou le déchargement du chariot (1), les rouleaux (53a) du groupe latéral (53) pouvant tourner autour d'axes verticaux respectifs et étant conçus pour guider et contenir le support (5 ; 70) latéralement au cours des étapes de chargement et de déchargement et au cours du transport.

13. Système de transport selon l'une quelconque des revendications précédentes, dans lequel au niveau d'au moins l'une parmi une station de chargement de support (3) et une station de déchargement de support (4 ; 10), on prévoit un guide sur le sol (8), pour provoquer l'alignement des chariots (1) par rapport à l'équipement (6a, 6b, 10) pour charger ou décharger les supports (5) sur/des chariots eux-mêmes.

14. Système de transport selon l'une quelconque des revendications précédentes, dans lequel, au niveau d'au moins l'une parmi une station de chargement de support (3) et une station de déchargement de support (4 ; 10), on prévoit une travée de chargement (6a), respectivement une travée de déchargement (6b) comprenant une pluralité de rouleaux (15a, 16) qui peuvent tourner selon des axes essentiellement horizontaux respectifs et sont placés pour définir un plan de translation pour les supports (5), ledit plan de translation étant généralement incliné pour permettre une translation essentiellement autonome des supports (5) entre une extrémité d'entrée (11) et une extrémité de sortie (12) de la travée (6a, 6b), chaque chariot (1) pouvant être positionné le long de la travée (6a, 6b) avec l'espace de réception respectif généralement orienté et aligné par rapport à l'extrémité de sortie de la travée elle-même de sorte qu'un support (5) sortant de la travée (6a, 6b) peut être reçu entre les ensembles de guidage (50) du chariot (1).

15. Système de transport selon la revendication 14, dans lequel ladite travée (6a, 6b) comprend au moins l'un parmi :
deux groupes (15) opposés desdits rouleaux (15a, 16), qui sont généralement mutuellement parallèles, au moins l'un desdits groupes (15) comprenant un ou plusieurs rouleaux de freinage (16) pour le ralentissement local de la translation des supports (5) de l'extrémité d'entrée (11) à l'extrémité de sortie (12) de la travée (6a, 6b) ;
un ensemble d'arrêt (9) associé à une structure fixe de la travée (6a, 6b) dans une position correspondant essentiellement à son extrémité de sortie, pour arrêter la translation des supports (5) sur les rouleaux (15a, 16) de ladite pluralité, ledit ensemble d'arrêt (9) pouvant être actionné manuellement pour provoquer le déplacement de son élément d'arrêt (9b) entre une position opérationnelle et une position non opérationnelle, dans lesquelles l'élément d'arrêt (9b) interfère et n'interfère pas respectivement, avec le passage d'un support (5) à travers l'extrémité de sortie de la travée (6a, 6b) ; et
au moins un ensemble d'espacement (17) ayant pour but de permettre le stockage temporaire sur la travée (6a, 6b) d'au moins un premier support (5) et d'un second support (5) en même temps, permettant au second support (5) qui est plus près de l'extrémité d'entrée de la travée, d'être maintenu en position pendant l'étape de déchargement du premier support (5), qui est plus près de l'extrémité de sortie de la travée, de la travée, l'ensemble d'espacement (17) comprenant en particulier un levier (18) articulé dans sa zone intermédiaire, par rapport à une structure fixe de la travée, le levier (18) ayant, au niveau d'une première extrémité, une partie de commande (18b) et au niveau de la seconde extrémité, une partie d'arrêt (18c), la partie de commande pouvant interagir avec le premier support (5) au cours de sa translation vers l'extrémité de sortie de la travée pour provoquer un mouvement angulaire du levier (18), de sorte que sa partie d'arrêt (18c) arrête le second support (5) au cours de sa translation vers l'extrémité de sortie de la travée (6a, 6b).
